# EUROPEAN PATENT SPECIFICATION

(11) **EP 3 222 086 B1**
(45) Date of publication and mention of the grant of the patent: **07.08.2019**
(21) Application number: 14906364.6
(22) Date of filing: 20.11.2014
(51) Int. Cl.: H04W 48/16, H04W 48/08, H04W 48/12

(54) **METHODS AND APPARATUS FOR VERIFYING SYSTEM INFORMATION**
VERFAHREN UND VORRICHTUNG ZUR ÜBERPRÜFUNG VON SYSTEMINFORMATIONEN
PROCÉDÉS ET APPAREIL PERMETTANT DE VÉRIFIER DES INFORMATIONS SYSTÈME

(43) Date of publication of application: 27.09.2017
(73) Proprietor: Telefonaktiebolaget LM Ericsson (publ), 164 83 Stockholm (SE)
(72) Inventor: HESSLER, Martin, S-587 58 Linköping (SE); ERIKSSON, Erik, S-585 93 Linköping (SE); FRENGER, Pål, S-583 34 Linköping (SE)
(74) Representative: Zacco Sweden AB
(86) International application number: PCT/SE2014/051390
(87) International publication number: WO 2016/080878

(56) References cited:
- WO-A1-2008/097044
- WO-A1-2008/097044
- US-A1- 2008 194 259
- US-A1- 2013 039 309
- US-B1- 6 628 946

## Description

### TECHNICAL FIELD

The disclosure relates to verification of system information configured in a wireless device, and more specifically to methods and apparatus for determining whether information configured in a wireless device needs to be updated.

### BACKGROUND

Long Term Evolution (LTE) is the fourth-generation (4G) mobile communication technologies standard developed within the 3^{rd} Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the Radio Access Network (RAN) of a UMTS and Evolved UTRAN (E-UTRAN) is the RAN of an LTE system. In an E-UTRAN, a User Equipment (UE) is wirelessly connected to a Radio Base Station (RBS) commonly referred to as an evolved NodeB (eNodeB or eNB) in LTE. An RBS is a general term for a radio network node capable of transmitting radio signals to a UE and receiving signals transmitted by a UE.

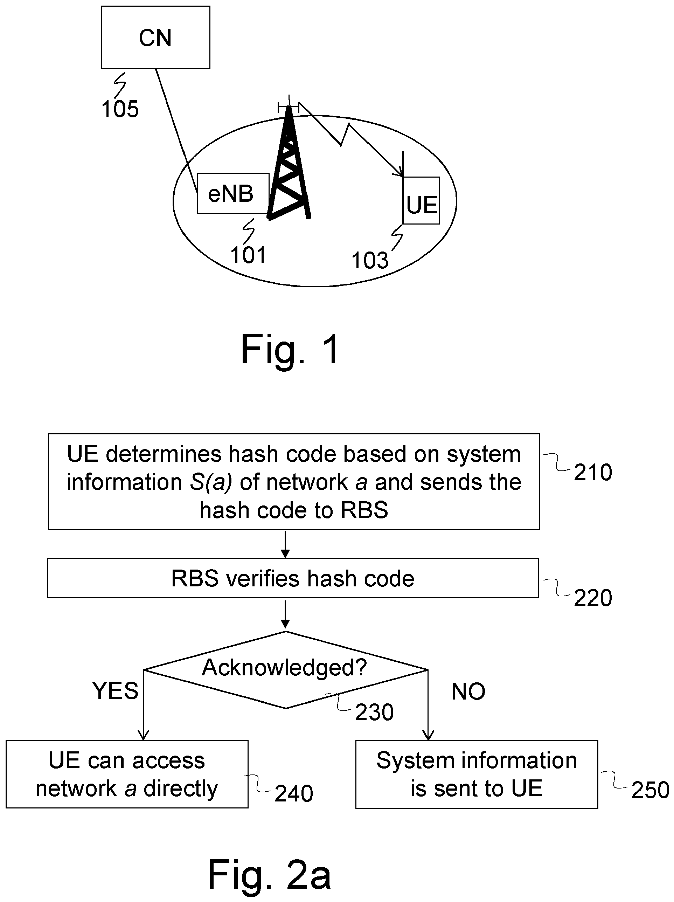

**Figure 1** illustrates a conventional RAN in an LTE system. An eNodeB 101 serves a UE 103 located within the eNodeB's geographical area of service also sometimes called a cell. The eNodeB 101 manages the radio resources in its cell and is directly connected to a Core Network (CN) 105. The eNodeB 101 may also be connected via an X2 interface to a neighboring eNodeB serving another cell.

A new system concept initially designed for frequencies above 6 GHz is developed to meet the future 5G requirements. One proposal for this new system is to logically separate the data transmissions from the system plane functionality. For the purpose of enabling high network energy performance or lower energy consumption per area unit, high adaptability, high peak throughput, and forward compatibility the design of the new system should be as lean as possible, meaning that the amount of mandatory transmissions from idle network nodes should be minimized. One proposal is to transmit a system signature sequence from nodes e.g. every 100 ms. The UEs could then derive the access information from this sequence by means of a table look-up. The actual table containing the access information could e.g. be transmitted very seldom, e.g. every 10.24 seconds, or be encoded on a SIM-card. This access information could also be used in multiple systems.

In the new system concept there is a distinction between access information and system information. Access information denotes the information required to access the network, i.e. information such as Random Access Channel (RACH) configuration and open-loop power control parameters. Therefore, the term system information is hereinafter used to denote all other non-initial access related information that the UE may need to know, i.e. information about how the system is configured such as cell re-selection parameters, paging configuration, parameters related to positioning, and Inter Radio Access Technology (IRAT) neighbors.

### Multiple stake-holders and systems

A 5G system will among other things be characterized by high capacity, high throughput, indoor deployment, high frequency bands, and short range. In many 5G-related scenarios the traditional cellular operators will not be the only stakeholder, rather many systems and configurations are used to fulfill the user requirements. Venue owners such as hotels, malls, train companies, and stadiums typically build Wireless Local Area Networks (WLANs) today since they don't have a "SIM-card relation" to their customers, i.e. their customers have no subscription offered by them. Operators on the other hand that offer the subscriptions cannot deploy 3GPP based technologies in many of these areas since they may not always have the required location access. Two examples of multi-stakeholder use cases are:
- A hotel owner building a small indoor network wanting to integrate with all outdoor macro networks.
- A macro operator wanting to provide improved performance for its subscribers by utilizing 1000 strategically located small cells deployed by a sub-way company.

Currently the network evolution is hindered by lack of multi-stakeholder support. In 4G or earlier generations of wireless networks this has been acceptable. However, in a 5G context where requirements will force the network rollout to include also indoor areas this will likely become a major problem to address.

### Multiple system and access technologies

When introducing a new generation the existing systems from earlier generations are typically not replaced. Hence multiple technologies are likely to be used in the future. These multiple systems need to be configured with system information, a configuration that is either signaled to the wireless devices or UEs using a system broadcast or using dedicated signaling. The time needed for such signaling of system information is often too large to facilitate session seamless handover between different systems and technologies.

### System time acquisition

Another reason for a wireless device or a UE to read the system broadcast of a system is to acquire the sub-frame number (SFN) of the system. The signaling of the SFN can be quite infrequent which may hence delay a UE when accessing the system.

### System access acquisition

UEs also need to read the system broadcast of a system in order to acquire the means and rights to access a system. In case of heavy load it can be beneficial to instruct UEs with lower priority to delay their access. This is especially true if the access is triggered synchronously by an event, e.g. a specific time of day, or based on sensor measurements, e.g. multiple movement sensors on a bridge.

Other related art in the technical field is disclosed in the following documents:
- D1, WO 2008/097044 A1, relates to a method for verifying the authenticity of system information communicated between the network and the mobile terminal, to handle the lack of security protection when broadcasting system information in a point-to-multipoint manner.
- D2, US 6 628 946 B1, describes a solution for sharing system information between cells so that a mobile station doesn't have to re-read identical system information each time it changes cell.
- D3, US 2008/194259 A1, is directed to a random access procedure for obtaining uplink time synchronization and access to a network.

### SUMMARY

It is therefore an object to address some of the problems outlined above, and to provide a solution for enabling a fast system access. This object and others are achieved by the methods and the apparatus according to the independent claims, and by the embodiments according to the dependent claims.

One advantage of embodiments is that they avoid access to the network for UEs with non-updated system information configuration.

Other objects, advantages and features of embodiments will be explained in the following detailed description when considered in conjunction with the accompanying drawings and claims.

### BRIEF DESCRIPTION OF THE DRAWINGS

**Figure 1** is a schematic illustration of an LTE network.
**Figure 2a** is a flowchart illustrating one embodiment of the present invention.
**Figures 2b****-c** are signaling diagrams illustrating the signaling between network and wireless device according to some embodiments of the present invention.
**Figures 3a****-d** are flowcharts illustrating the method in the wireless device according to some embodiments of the present invention.
**Figures 4a****-c** are flowcharts illustrating the method in the network node according to embodiments.
**Figures 5a****-b** are block diagrams schematically illustrating the wireless device and the network node according to embodiments.

### DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

Embodiments are described in a non-limiting general context in relation to an example scenario in a wireless communication network, where a wireless device, sometimes referred to as a UE, is communicating with an RBS of the wireless communication network. It should be noted that the embodiments may be applied to any network technology in which a wireless device is configured with information related to a network before accessing or connecting to the network. Furthermore, the wireless device may in other example scenarios be communicating with other network nodes via the RBS, such as with another radio network node, a core network node, or a system management node. Examples of wireless devices are personal computers such as laptop computers and netbook computers, portable telephone communications devices such as smart phones, tablets, and Machine-Type-Communication (MTC) devices.

A typical UE often has up to date system information for a network configured in the UE's system information table when it attempts to access the network, although the network has no knowledge about it. Today there is no way for the network to verify stored system information in conventional UEs. Therefore the network configures the UE with system information needed for the access to the network, which introduces both overhead and delay. In future systems where system information can be configured through many paths and where very long discontinuous transmission/reception cycles are enabled, the problem related to delay may become even bigger.

By checking, as in embodiments of the present invention, whether the configured information in the UE is up to date instead of actually configuring the UE with the information, both overhead and delay can be reduced. In embodiments of the invention, the problem of delays at access which is due to the configuration of information in the wireless device is addressed by a solution where hash codes are determined both in the wireless device and in a node of the wireless communication network that the wireless device wants to access or connect to. On both sides the hash code is determined based on configured information in the wireless device and in the network node respectively. The hash code determined by the wireless device is hereinafter referred to as the device hash code, and the hash code in the network node is referred to as the network hash code. The hash codes are used to verify whether information configured in the wireless device needs to be updated or not. An exchange of information between the wireless device and the network node is needed for the verification, where the exchange involves the device hash code and the network hash code. The exchange of information may be performed in different ways depending on the embodiment, as will be described below.

A hash function is any function that can be used to map input digital data of arbitrary size to output digital data of fixed size, designed such that even a slight difference in input data produces, with very high probability, a different output data. The output data may be referred to as a hash code. The configured information in the wireless device may thus be used as input data to a hash function used to determine the device hash code. Correspondingly, information associated with the wireless communication network and configured in the network node may be used as input to the same hash function to determine the network hash code. A hash code may sometimes also be referred to as a check sum or a cyclic redundancy check (CRC).

In embodiments of the invention, hash codes derived for configured system information are used to enable fast system access for a UE and to reduce overhead related to the distribution of system information. It is only in the case of a failed device hash code verification that the extra overhead and/or latency of system information acquisition is needed. By letting the UE make immediate access to an RBS after a successful device hash code verification procedure, the time to access the network can be substantially reduced.

Furthermore, a fast switch or handover from one network to another of a UE is enabled by reusing the system information that the UE has already stored. The UE calculates a device hash code for the system information. This device hash code is then transmitted to the network in an initial system connection phase, for example, as part of the random access procedure. The device hash code is compared with a corresponding network hash code. If the device hash code corresponds to the network hash code, this indicates that the configured system information in the UE associated with the device hash code is correct. The UE may then be allowed to immediately access the network. If the device hash code is incorrect, i.e. that it does not correspond to the network hash code, the UE may e.g. be forced to listen for system information broadcast by the network before accessing the network in order to update the configured information. Alternatively the network may communicate the correct system information to the UE in a dedicated way. The exchange of information between the UE and the network node in this embodiment comprises the sending by the UE of the device hash code to the network node and the sending by the network node of an indication in response to the device hash code, where the indication indicates whether the configured system information in the UE needs to be updated. However, the exchange of information may in other embodiments be performed in other ways, e.g. as described in the subsection *"Embodiment D* - *Access Barring"* below.

One embodiment of the invention is hereinafter described with reference to **Figure 2a** which is a flow chart illustrating a method according to embodiments of the invention. A UE has acquired and configured system information S for one or more systems or networks that the UE can connect to. This system information may comprise one or more of the following non-limiting list of example parameters:
- Random access parameters, such as a set of random access preambles to use, uplink time slot configurations for the physical random access channel, power-control and backoff parameters for the random access channel;
- System capability information such as supported transmission modes, antenna configuration, Coordinated Multipoint (CoMP) capabilities, Supported LTE version information;
- Paging related information such as synchronization and demodulation reference sequences used for paging, or paging indication channel configuration;
- Neighboring cell related information such as multi-RAT neighbour information, white-list, black list;
- Frequency band information such as carrier frequency, available uplink or downlink bands;
- Sub-frame number (SFN);
- Control channel mappings ;
- Data channel mappings;
- Power control settings;
- Cell re-selection parameters;
- System specific user identification.

Many other system information details can also be contained in the system information *S*, which is often structured in a system information table. It may be noted that the system information table can contain information from different time periods and from multiple systems. The system information for a network *a*, referred to as *S(a)* typically changes rarely. In 210 the UE determines a device hash code based on system information *S(a)*, e.g. by using system information *S(a)* as input data to a hash function. The device hash code is sent to the RBS that the UE wants to access. In 220 the RBS verifies the device hash code by e.g. comparing it with its own network hash code that has been determined by the RBS based on system information configured in the RBS. If the comparison indicates that the system information configured in the RBS corresponds to *S(a)* configured in the UE, the RBS will acknowledge that the device hash code is correct in 230, and the UE may then conclude in 240 that the configured system information in the UE *S(a)* can be used to directly access the RBS. On the other hand, if the comparison indicates that the system information configured in the RBS does not correspond to the one configured in the UE, the RBS will not acknowledge that the device hash code is correct in 230. The UE may then conclude that the configured system information in the UE *S(a)* is incorrect for accessing the RBS and may prepare for an update of the configured system information based e.g. on system information broadcasted by the RBS in 250. The system information is thus not always sent to the UE before the access to the network but only when it is determined that an update in the UE is needed, as illustrated in **Figure 2a**.

As described above, a non-acknowledgement of the device hash code from the RBS means that the UE 203 needs to update its configured system information. The RBS may inform the UE that the configured information needs to be updated in different ways. In one embodiment, the UE is explicitly notified that it needs to acquire new system information with a message indicating that an update of the configured information is needed. In still another alternative embodiment, the indication that the device hash code is incorrect and that the UE needs to update its configured information is implicit when the UE does not receive any response to the transmitted device hash code. The RBS thus only acknowledges the reception of the device hash code when the device hash code is verified to be correct.

In embodiments, some of the information *S(a)* of the system information table in a UE can be identified to belong to a particular system a. This system identification may be implemented in a number of ways. In one example embodiment, the carrier frequency and the system signature can be used for the system identification. Often the same configuration is used for the same carrier frequency and system signature. In some rare cases, for example, when two operators share the same carrier license and the user is moving between two base stations managed by the two operators the system information can change even if this is not known by the UE.

In the following, different embodiments of the invention, denoted A-G, adapted to different use cases are described.

### Embodiment A - Fast user identification

In this embodiment the system identification described above is extended by also including some UE identification information for a particular UE *x*. This UE identification information may be different for different systems. If the UE identification information of a UE is contained in the system information *S(a,x)* for which the device hash code is determined, this makes it possible to determine with some accuracy that the UE sending the device hash code is a UE that has access rights to the network.

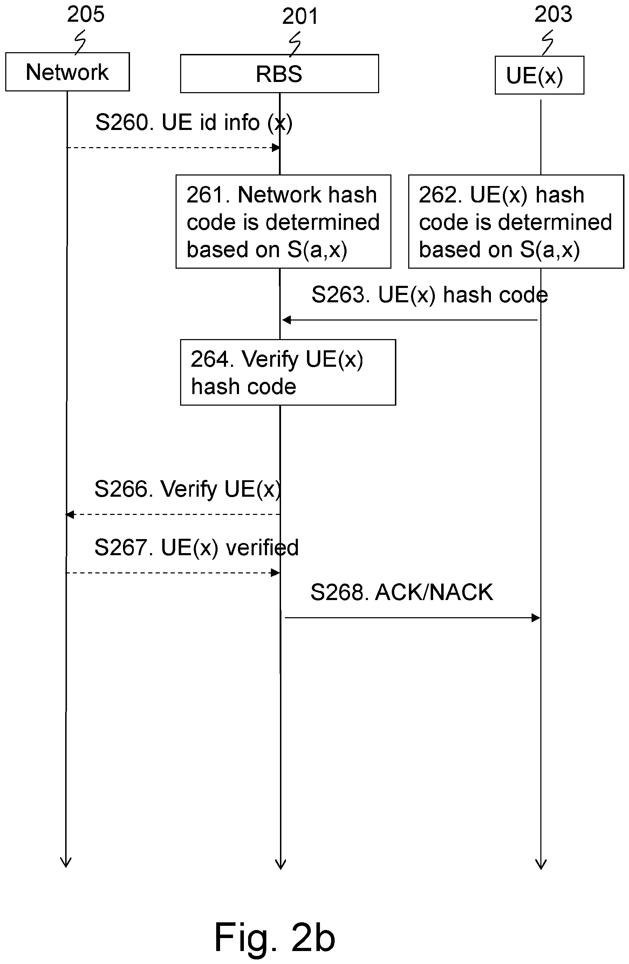

Embodiment A is hereinafter described with reference to **Figure 2b** which is a signaling diagram illustrating the signaling between the RBS 201 and the UE 203, and between the RBS 201 and the communication network 205 of the RBS 201. The RBS 201 may receive information from the network 205 related to a UE, *UE(x),* with rights to access the network 205 in *S260.* This UE identification information, *UE id info (x)*, may be transmitted to the RBS 201 from, for example, a compatible source RBS in case of handover, or from a CN node in case of e.g. inter technology or operator handover. In some cases the verification of the initial UE identification may be followed by additional verification steps in S266 and S267, for example, using information on the SIM-card of the UE.

In 261, a network hash code is determined by the RBS 201 based on configured system information *S(a, x)* in the RBS. *S(a, x)* also comprises the identities of the UEs with access rights. Correspondingly, in 262, a device hash code is determined by the UE 203 based on system information *S(a, x)* configured in the UE. The system information *S(a, x)* configured in the UE comprises the identity x of the UE 203. In *S263* the UE 203 transmits the device hash code to the RBS 201, which may then in 264 verify the device hash code by comparing it with the network hash code. Based on this comparison, the RBS 201 may indicate to the UE 203 in *S268* whether the configured information in the UE 203 needs to be updated or not, e.g. by sending an acknowledgement meaning that the UE 203 is now accepted for direct access to the RBS. Alternatively, the RBS may send a non-acknowledgement indicating that the UE 203 needs to update its system information, or that the UE is not identified as having access rights to the network 205.

In embodiments of the invention, separate hash codes may be determined for the system information *S(a)* and for the UE identification information *(x)*. Separate hash codes makes it possible for the UE to determine whether it is the system information *S(a)* that needs to be updated indicated by a non-acknowledgement of the hash code associated with the system information, or whether the UE has no access right to the network indicated by a non-acknowledgement of the hash code associated with the UE identification information *(x)*. This may be useful when the UE identity is represented by a relatively large number, which may be the case in a future network with a very large number of devices, or when the "access rights" consists of a relatively long security key that needs to be verified before it can be used.

Embodiment A may thus be used to make a first UE identification during the initial connection phase. The advantage is that UEs that are not allowed to connect can be quickly identified. This may be necessary in future systems when a very lean system broadcast is used, making it more likely to have system configuration mismatches in the UEs.

### Embodiment B - System configuration step

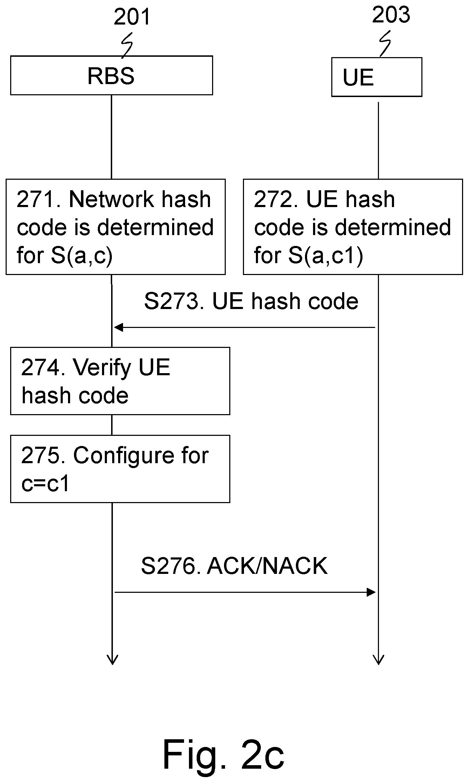

In this embodiment B, the verification of the configured system information in the UE may take into account e.g. that the target RBS in a handover can support multiple configurations. For example, the UE can be configured for different operations for example for different Quality of Service classes, all supported by the target RBS. In some cases the RBS is already configured for this configuration, in other cases the RBS needs to enable the operation. This is schematically depicted in the signaling diagram of **Figure 2c**. The RBS 201 may in 271 determine the network hash codes for the system information *S(a, c)* according to several different configurations *c*. The network hash codes may e.g. be calculated using a hash function as described previously. However, only one of them - *c1* - is matching the configuration of the UE 203. The UE 203 may in 272 determine the device hash code for *S(a,c1)* which is sent in S273 to the RBS 201. In 274 the RBS 201 verifies the device hash code against the plurality of network hash codes to determine the configuration *c1* used by the UE 203. In 275, the RBS 201 adapts its configuration to configuration *c1*. In S276 the RBS 201 may then indicate to the UE 203 that the configured information in the UE 203 needs no update and can be used for direct access to the network 205.

### Embodiment C - System sub-frame number (SFN) verification

As mentioned in the background, one reason for a UE to read the system broadcast is to acquire the SFN of the system. The signaling of the SFN can be quite infrequent which may hence delay a UE when accessing the system.

In embodiment C, the SFN is included in the system information *S(a)*. The SFN may be the only information in *S(a)*. Such an embodiment may, for example, be used for a stationary UE such as an MTC-device that is sleeping for very long durations, as this also implies that the SFN is potentially very large. The sleep cycle of the device then dictates together with the accuracy of the clock in the device the uncertainty of the SFN. If no synchronization should be done by the device a very high certainty that the SFN is correct is needed. However, with only a few bits of hash code or CRC determined based on the SFN and used according to embodiments of the invention, a very accurate check of the SFN can be done.

### Embodiment D - Access barring

Embodiment D of the invention may be applied for an access barring use case. The system information in a cell may be updated based on the load in the cell. For high load situations the system information may be updated to block access for low priority users, e.g. Access Class Barring. A UE therefore needs to read the system information before accessing the system. To guarantee that the UE actually do read the system information, verifications based on the device and network hash codes may be done. A UE accessing with an incorrect device hash code can thus be blocked by the system.

In one exemplary embodiment of the invention applied for one access barring use case, the device hash code is included in the third message (Msg3) of the random access procedure sent from the UE to the RBS. The RBS may compare the received device hash code with its own network hash code to determine whether the UE has read and stored the correct system information for the cell. The RBS may then indicate in the fourth message (Msg4), i.e. in the contention resolution message of the random access procedure, whether the UE needs to update its configured system information or not. A failed contention resolution may be an indicator to the UE to read and update the system information. The RBS may also decide to dynamically schedule additional broadcast signals when the device hash code verification indicates that the UE needs to read and update the system information. In embodiments, the RBS may attempt to verify the device hash code using both a previously used and a current network hash code.

In another exemplary embodiment for access barring, the exchange of information between the UE and the RBS is initiated by the RBS instead of the UE. The exchange of information is the basis for determining whether the configured information in the wireless device needs to be updated. The UE first sends a random access preamble in the first message (Msg1) of the random access procedure to the RBS according to prior art, to indicate that it wants to access the network. The RBS may then code the random access response in the second message (Msg2) using the network hash code. The UE may attempt to decode the received random access response based on its device hash code. If the attempt to decode fails, the UE may interpret this as an indication that the configured information in the UE needs to be updated, and may thus read and configure system information from the RBS. The initiated random access procedure is stopped and may be reinitiated by the UE after the update of the system information. If the configured information in the UE is correct and up to date, the UE will be able to decode the random access response, and the random access procedure can proceed. The coding of the random access response may be performed by using a scrambling function that is initiated with the network hash code. The UE may then decode using the same scrambling function and the device hash code. The decoding will thus only be successful if the device hash code corresponds to the network hash code. In embodiments, the UE may e.g. check the result from the decoding using an error detecting code such as a CRC.

In some embodiments, the UE may try different hypothesizes to determine that the preamble was received but the system information has changed. The trial of different hypotheses may depend on the coverage or the System to Interference plus Noise (SINR) of the UE. For example, if the UE manages to detect that the network did transmit a response to the preamble but the UE could not successfully decode and verify the content of the Msg2 transmission even though the received signal quality was sufficient, then this may be an indication that the decoding attempt failed because of an erroneous device hash code that did not correspond to the network hash code used to code Msg2. In this case the UE shall wait for a new broadcasted system information message before trying again to transmit a new random access preamble. If, on the other hand the SINR of the received Msg2 was poor, then the failed decoding could be due to that the network never transmitted Msg2 to this UE. In this case the UE shall re-transmit the random access preamble after some random back off time, without first waiting for a new system information transmission.

### Embodiment E - Applying a hash code to a sub-set of the system information

For many types of UEs not all system information is relevant. For very low rate and low complexity users, such as MTC devices, system parameters related to e.g. Coordinated Multipoint (CoMP) or Multiple Input - Multiple Output (MIMO) features may not be relevant since MTC devices cannot utilize such advanced features anyway. Hence the device hash code may for some UEs be calculated for a limited set of the system information. By verifying that the device hash code is correct the network knows that parameters that are relevant when communicating with a particular UE are configured correctly.

Some system information parameters are very much related to mobility, such as IRAT neighboring lists. Hence, a plurality of hash codes may be calculated separately for different parts of the system information. A plurality of device hash codes may in embodiments be communicated to the serving RBS. This makes it possible for the RBS to indicate to the UE that only a smaller part of the system information associated with one of the plurality of device hash codes needs to be updated. This may e.g. be only information related to neighboring cells. This also implies that only that part of the system information may be transmitted to the UE for updating the configuration.

The embodiment E may be used to enable selective retransmissions of the system information to UEs that are in bad coverage. For a UE it may be enough to initially secure an updated sub-set of the system information, where the sub-set enables the UE to connect to the network. Therefore the device and the network hash code may be chosen to correspond to this sub-set of the system information. The device hash code of a UE in bad coverage that cannot fully decode the broadcasted system information may be verified to be incorrect by the RBS, and the RBS may therefore be able to retransmit this sub-set of the system information in a dedicated way to the UE. One example use-case may be a system capable of large beam-forming gains, where the UE can be in bad coverage for system broadcast although the UE has very good dedicated data speeds using e.g. massive MIMO.

### Embodiment F - Received hash code unknown to the RBS

When calculating the network hash code for the system information in an RBS, the RBS may store both the network hash code and the corresponding system information in a mapping table. If a device hash code is compared also to previously used network hash codes when it does not match the current network hash code, the RBS may derive the system information that the UE currently has from the mapping table. Thereby, the RBS may send an update to the UE of the parts that need updating only. The advantage of such an embodiment is that it minimizes the overhead related to the system information update.

When the RBS cannot match the device hash code received from the UE with any of the previous and current network hash codes, this may be due to that some other network node configured the UE with system information from that node's network. In this situation it may be beneficial to have a central node keeping track of the mapping table. Each time a network node configures a UE with system information associated with a network hash code, it informs a central node about both the network hash code and the associated system information. Later, when the UE enters a new network node for which the device hash code is unknown, that network node may contact the central node to retrieve the associated system information. The network node may determine based on the retrieved system information whether the configured information in the UE needs to be updated or not. In the central node that keeps track of different system information that has previously been used in the network, there may be a need for some algorithm that periodically removes invalid or inactive mappings. For example, if a particular hash code is not reported as being used during a certain time window that mapping may be removed.

### Embodiment G - Communicating hash code as part of UE context in handover procedure

As the UE moves through the network the device hash code associated with the configured system information in the UE may be communicated as part of the UE context that is handed over from a source to a target RBS. In case the device hash code is unknown to the target RBS, it may either ask the source RBS or a central node keeping track of the mapping between hash codes and system information.

### Methods according to embodiments

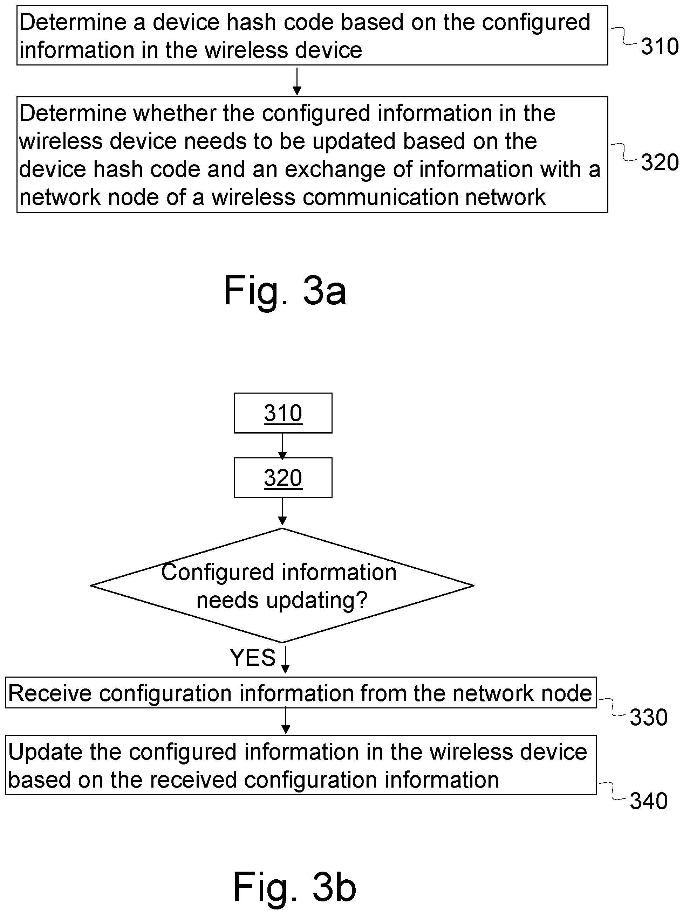

**Figure 3a** is a flowchart illustrating one embodiment of a method performed by a wireless device 500. The wireless device is configured with information associated with either the wireless device, or one or more wireless communication networks to which the wireless device is connectable, or both. Examples of the configured information have been listed above. In embodiments, the wireless device 500 may be e.g. a UE, an MTC device, or any other kind of terminal wirelessly communicating with a communication network. The method comprises:
- 310: Determining a device hash code based on the configured information in the wireless device.
- 320: Determining whether the configured information in the wireless device needs to be updated based on the device hash code and an exchange of information with a network node 550 of a wireless communication network. The network node 550 may e.g. be an RBS of the communication network.

**Figure 3b** is a flowchart illustrating another embodiment of the method in the wireless device 500. When it is determined that the configured information in the wireless device needs to be updated, the method optionally comprises the below steps 330 and 340, in addition to the determining of a device hash code in 310 and the determining whether the configured information in the wireless device needs to be updated in 320 described above with reference to **Figure 3a**.
- 330: Receiving configuration information from the network node. The configuration information may be broadcasted by the network node, or may be received from the network node upon request from the wireless device.
- 340: Updating the configured information in the wireless device based on the received configuration information.

When the wireless device has updated its configured information, the wireless device may access or connect to the network node and may communicate with the network node. When it is determined that the configured information in the wireless device needs no update, the method may comprise the step of directly accessing or connecting to the network node without having to update any configured information first. The advantage is a faster access or connection to the network, as well as reduced overhead for distributing configuration information to the wireless device.

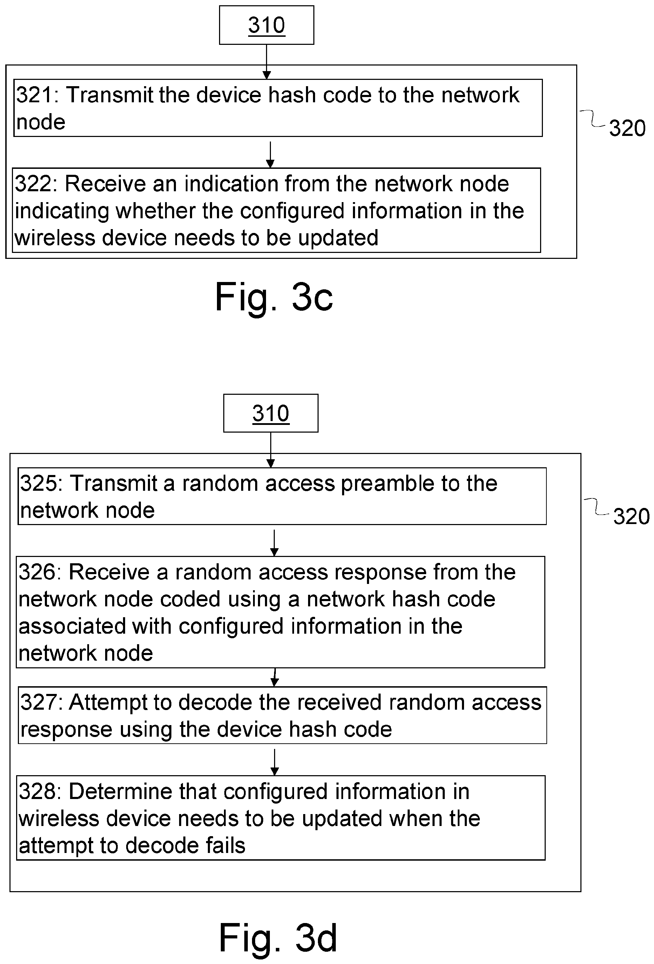

**Figure 3c** is a flowchart illustrating another embodiment of the method in the wireless device 500. The method comprises the determining of the device hash code based on the configured information in the wireless device in 310 already described above. However, the determining whether the configured information in the wireless device needs to be updated, in 320, may comprise:
- 321: Transmitting the device hash code to the network node.
- 322: Receiving an indication from the network node in response to the transmitted device hash code, the indication indicating whether the configured information in the wireless device needs to be updated.

The indication received in 322 may be a message indicating that the configured information in the wireless device needs to be updated. Alternatively, the indication that the configured information in the wireless device needs to be updated may be implicit by not receiving any message in response to the transmitted device hash code. The method may then further comprise receiving configuration information from the network node in 330 and updating based on the received information in 340, as described with reference to **Figure 3b**. In another alternative embodiment, the received indication is a message comprising configuration information. The message indicates that the configured information in the wireless device needs to be updated. The method may then further comprise updating the configured information in the wireless device based on the received configuration information.

This is thus one example embodiment of how the exchange of information with the network node 550 may be performed to enable the determining of whether the configured information in the wireless device needs to be updated. Another example embodiment is described with reference to **Figure 3d** below.

**Figure 3d** is a flowchart illustrating another embodiment of the method in the wireless device 500. The embodiment has also been described in the subsection *"Embodiment D* - *Access barring"* above. The method comprises the determining of the device hash code based on the configured information in the wireless device in 310, already described above. The determining whether the configured information in the wireless device needs to be updated, in 320, may comprise:
- 325: Transmitting a random access preamble to the network node.
- 326: Receiving a random access response from the network node coded using a network hash code associated with configured information in the network node.
- 327: Attempting to decode the received random access response using the device hash code.
- 328: Determining that the configured information in the wireless device needs to be updated when the attempt to decode fails.

Also this embodiment may be complemented with receiving configuration information from the network node in 330 and updating based on the received information in 340, as described with reference to **Figure 3b**.

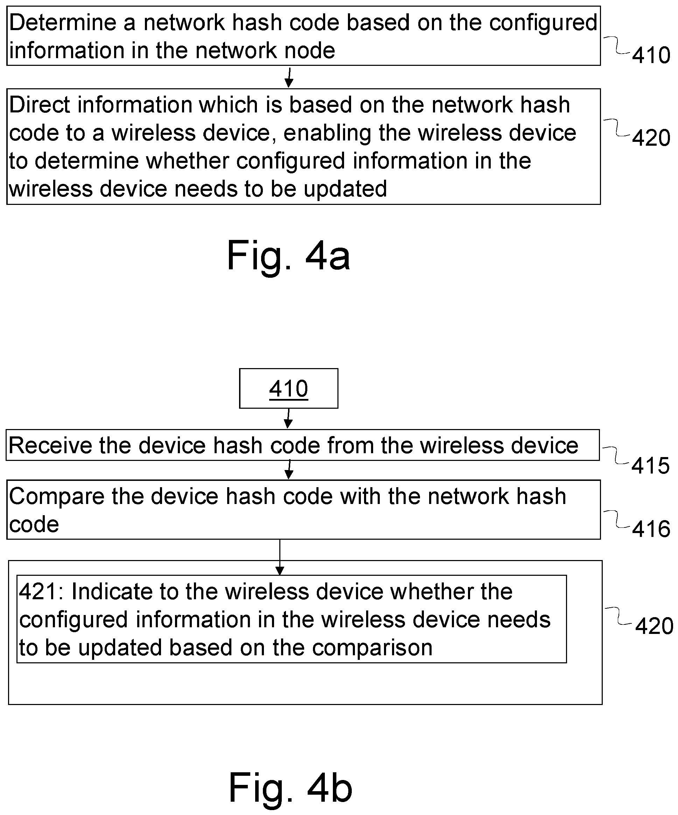

**Figure 4a** is a flowchart illustrating one embodiment of a method performed by the network node 550. The network node is configured with information associated with the wireless communication network. The embodiment corresponds to the method embodiment performed by the wireless device 500 described with reference to **Figure 3a**. The network node 550 may e.g. be an RBS of a wireless communication network, or a core network or system management node. The method comprises:
- 410: Determining a network hash code based on the configured information in the network node.
- 420: Directing information which is based on the network hash code to a wireless device 500, which may be a UE. The information enables the wireless device to determine whether configured information in the wireless device needs to be updated.

**Figure 4b** is a flowchart illustrating another embodiment of the method in the network node 550. This embodiment corresponds to the embodiment for the method in wireless device described with reference to **Figure 3c** above. In addition to the determining of the network hash code in 410 described above with reference to **Figure 4a**, the method optionally comprises:
- 415: Receiving the device hash code from the wireless device.
- 416: Comparing the device hash code with the network hash code.

Furthermore, directing the information in 420 may comprise:
- 421: Indicating to the wireless device whether the configured information in the wireless device needs to be updated based on the comparison. The indicating may comprise one of the following: transmitting a message to the wireless device indicating that an update of the configured information in the wireless device is needed; transmitting configuration information to the wireless device indicating that an update based on the configuration information is needed; and implicitly indicating that an update of the configured information in the wireless device is needed by not transmitting a message in response to the received device hash code.

In one embodiment corresponding to embodiment A described previously, the device hash code may be associated also with an identity of the wireless device. The method may then further comprise determining the identity of the wireless device using the device hash code, and deciding whether the wireless device should have access to the system based on the determined identity. This decision may e.g. be based on subscription information for the wireless device that the network node has access to.

As described for embodiment B above, the determining of the network hash code in 410 may comprise determining two network hash codes based on two alternative configurations associated with the wireless communication network. The comparing in 416 may thus comprise matching the device hash code against the two network hash codes. When a match is found, the method may further comprise selecting the alternative configuration corresponding to the matching one of the two network hash codes. Directing the information in 420 may then comprise indicating to the wireless device that the configured information in the wireless device needs no update.

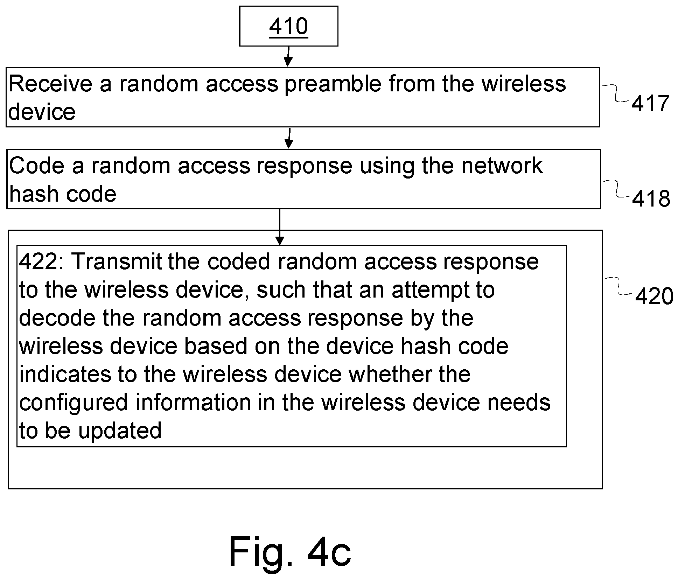

**Figure 4c** is a flowchart illustrating another embodiment of the method in the network node 550. This embodiment corresponds to the embodiment for the method in wireless device described with reference to **Figure 3d** above. The method optionally comprises, in addition to the determining of the network hash code in 410 described above with reference to **Figure 4a**:
- 417: Receiving a random access preamble from the wireless device.
- 418: Coding a random access response using the network hash code.

Directing the information in 420 may comprise:
- 422: Transmitting the coded random access response to the wireless device, such that an attempt to decode the random access response by the wireless device based on the device hash code indicates to the wireless device whether the configured information in the wireless device needs to be updated.

### Apparatus according to embodiments

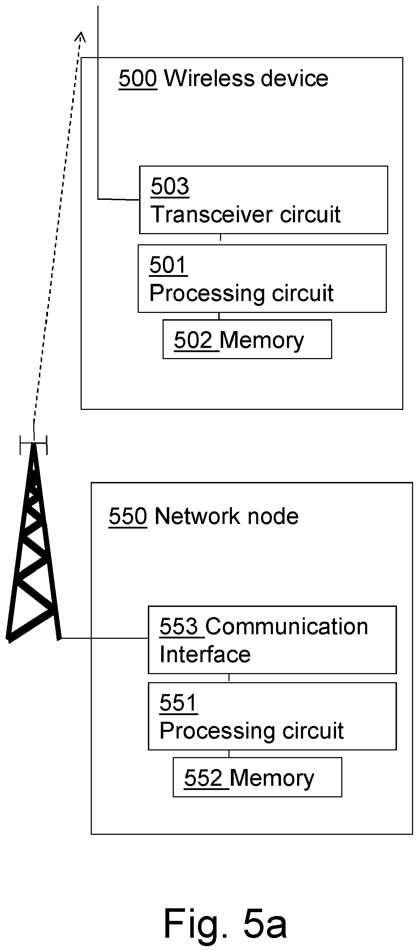

An embodiment of a wireless device 500 and a network node 550 is schematically illustrated in the block diagram in **Figure 5a**. The wireless device may e.g. be a mobile terminal or an MTC device, and the network node may be a radio network node, a core network node, or a system management node of a wireless communication network. The wireless device 500 is configured with information associated with either the wireless device, or one or more wireless communication networks to which the wireless device is connectable, or both. Examples of the configured information have been listed above. The wireless device is further configured to determine a device hash code based on the configured information in the wireless device, and to determine whether the configured information in the wireless device needs to be updated based on the device hash code and an exchange of information with the network node 550 of the wireless communication network.

In one embodiment, the wireless device may be configured to determine whether the configured information in the wireless device needs to be updated by transmitting the device hash code to the network node, and by receiving an indication from the network node in response to the transmitted device hash code. The indication indicates whether the configured information in the wireless device needs to be updated.

The indication may be a message indicating that the configured information in the wireless device needs to be updated. Alternatively, the indication that the configured information in the wireless device needs to be updated is implicit by not receiving any message in response to the transmitted device hash code. The wireless device may be further configured to receive configuration information from the network node, and update the configured information in the wireless device based on the received configuration information. The configuration information may be broadcasted by the network node, or may be received from the network node upon request from the wireless device.

The received indication may alternatively be a message comprising configuration information. The message then indicates that the configured information in the wireless device needs to be updated. The wireless device may be further configured to update the configured information in the wireless device based on the received configuration information.

In another embodiment (see embodiment D above), the wireless device 500 may be configured to determine whether the configured information in the wireless device needs to be updated by transmitting a random access preamble to the network node, receiving a random access response from the network node coded using a network hash code associated with configured information in the network node, and attempting to decode the received random access response using the device hash code. The wireless device may in this embodiment be further configured to determine that the configured information in the wireless device needs to be updated when the attempt to decode fails. The wireless device may be further configured to receive configuration information from the network node, and update the configured information in the wireless device based on the received configuration information. The configuration information may be broadcasted by the network node, or may be received from the network node upon request from the wireless device.

The network node 550 in the block diagram in **Figure 5a** is configured for operation in a wireless communication network. The network node is also configured with information associated with the wireless communication network, and to determine a network hash code based on the configured information in the network node. The network node is further configured to direct information which is based on the network hash code to the wireless device 500. The information enables the wireless device to determine whether configured information in the wireless device needs to be updated.

In one embodiment, the network node 550 may be further configured to receive the device hash code from the wireless device, and compare the device hash code with the network hash code. The network node may be further configured to direct the information to the wireless device by indicating to the wireless device whether the configured information in the wireless device needs to be updated based on the comparison. The network node 550 may be further configured to indicate whether the configured information in the wireless device needs to be updated by one of the following: transmitting a message to the wireless device indicating that an update of the configured information in the wireless device is needed; transmitting configuration information to the wireless device indicating that an update based on the configuration information is needed; and implicitly indicating that an update of the configured information in the wireless device is needed by not transmitting a message in response to the received device hash code.

The device hash code received from the wireless device may be associated also with an identity of the wireless device. The network node 550 may be further configured to determine the identity of the wireless device using the device hash code, and decide whether the wireless device should have access to the system based on the determined identity.

The network node 550 may be configured to determine the network hash code by determining two network hash codes based on two alternative configurations associated with the wireless communication network. The network node may be further configured to compare hash codes by matching the device hash code against the two network hash codes. When a match is found, the network node may be configured to select one of the two alternative configurations corresponding to the matching one of the two network hash codes, and direct information by indicating to the wireless device that the configured information in the wireless device needs no update.

In another embodiment, the network node 550 may be further configured to receive a random access preamble from the wireless device, and code a random access response using the network hash code. The network node may be configured to direct information by transmitting the coded random access response to the wireless device, such that an attempt to decode the random access response by the wireless device based on the device hash code indicates to the wireless device whether the configured information in the wireless device needs to be updated.

In embodiments of the invention, the wireless device 500 may comprise a processing circuit 501 and a memory 502 as illustrated in **Figure 5a**. The wireless device may also comprise a transceiver circuit 503 configured to communicate wirelessly with the network node 550 and connected to the processing circuit 501. The transceiver circuit 503 may be connected to one or more antennas via one or more antenna ports. The memory 502 contains instructions executable by said processing circuit 501 whereby said wireless device 500 is operative to determine a device hash code based on the configured information in the wireless device, and determine whether the configured information in the wireless device needs to be updated based on the device hash code and an exchange of information with the network node 550 of the wireless communication network.

In one embodiment, the memory 502 may contain further instructions executable by the processing circuit 501, whereby the wireless device 500 may be operative to determine whether the configured information in the wireless device needs to be updated by transmitting the device hash code to the network node, and by receiving an indication from the network node in response to the transmitted device hash code. The indication indicates whether the configured information in the wireless device needs to be updated.

The indication may be a message indicating that the configured information in the wireless device needs to be updated. Alternatively, the indication that the configured information in the wireless device needs to be updated is implicit by not receiving any message in response to the transmitted device hash code. The wireless device 500 may be operative to receive configuration information from the network node, and to update the configured information in the wireless device based on the received configuration information. The configuration information may be broadcasted by the network node, or may be received from the network node upon request from the wireless device.

The received indication may alternatively be a message comprising configuration information. The message then indicates that the configured information in the wireless device needs to be updated. The wireless device may be operative to update the configured information in the wireless device based on the received configuration information.

In another embodiment (see embodiment D above), the memory 502 may contain further instructions executable by the processing circuit 501, whereby the wireless device 500 may be operative to determine whether the configured information in the wireless device needs to be updated by transmitting a random access preamble to the network node, by receiving a random access response from the network node coded using a network hash code associated with configured information in the network node, and by attempting to decode the received random access response using the device hash code. The wireless device may in this embodiment further be operative to determine that the configured information in the wireless device needs to be updated when the attempt to decode fails. The wireless device may be operative to receive configuration information from the network node, and to update the configured information in the wireless device based on the received configuration information. The configuration information may be broadcasted by the network node, or may be received from the network node upon request from the wireless device.

Furthermore, the network node 550 may comprise a processing circuit 551 and a memory 552 as illustrated in **Figure 5a**. The network node may also comprise a communication interface 553 connected to the processing circuit 551 and configured to communicate with the wireless device 500 either directly over the air, or via another network node. The communication interface 553 may thus be connected to one or more antennas via one or more antenna ports in some embodiment. The memory 552 contains instructions executable by said processing circuit 551 whereby said network node 550 is operative to determine a network hash code based on the configured information in the network node, and direct information which is based on the network hash code to a wireless device 500. The information enables the wireless device to determine whether configured information in the wireless device needs to be updated.

In one embodiment, the memory 552 may contain further instructions executable by the processing circuit 551, whereby the network node 550 is operative to receive the device hash code from the wireless device, and to compare the device hash code with the network hash code. The network node may be operative to direct the information to the wireless device by indicating to the wireless device whether the configured information in the wireless device needs to be updated based on the comparison. The network node 550 may be operative to indicate whether the configured information in the wireless device needs to be updated by one of the following: transmitting a message to the wireless device indicating that an update of the configured information in the wireless device is needed; transmitting configuration information to the wireless device indicating that an update based on the configuration information is needed; and implicitly indicating that an update of the configured information in the wireless device is needed by not transmitting a message in response to the received device hash code.

The device hash code received from the wireless device may be associated also with an identity of the wireless device. The memory 552 may contain further instructions executable by the processing circuit 551, whereby the network node 550 is operative to determine the identity of the wireless device using the device hash code, and to decide whether the wireless device should have access to the system based on the determined identity.

The memory 552 may contain further instructions executable by the processing circuit 551, whereby the network node 550 is operative to determine the network hash code by determining two network hash codes based on two alternative configurations associated with the wireless communication network. The network node may be operative to compare hash codes by matching the device hash code against the two network hash codes. When a match is found, the network node may be operative to select one of the two alternative configurations corresponding to the matching one of the two network hash codes, and to direct information by indicating to the wireless device that the configured information in the wireless device needs no update.

In another embodiment, the memory 552 may contain further instructions executable by the processing circuit 551, whereby the network node 550 is operative to receive a random access preamble from the wireless device, and to code a random access response using the network hash code. The network node may be operative to direct information by transmitting the coded random access response to the wireless device, such that an attempt to decode the random access response by the wireless device based on the device hash code indicates to the wireless device whether the configured information in the wireless device needs to be updated.

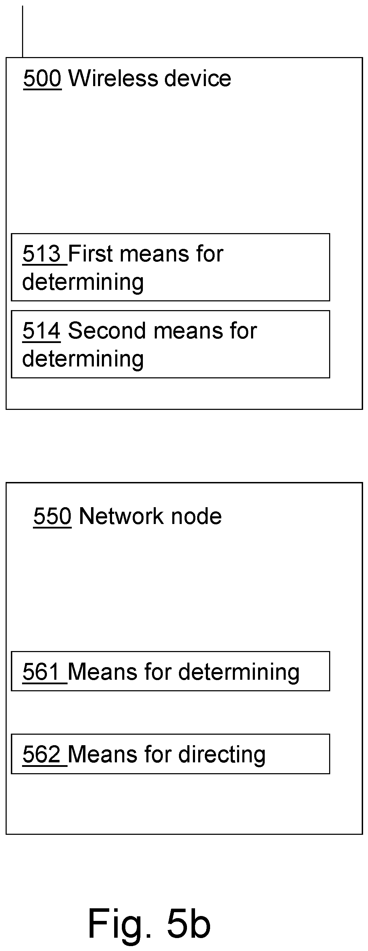

In an alternative way to describe the embodiment in **Figure 5a**, illustrated in **Figure 5b****,** the wireless device 500 may comprise a first means for determining 513 adapted to determine a device hash code based on the configured information in the wireless device. The wireless device may also comprise a second means for determining 514 adapted to determine whether the configured information in the wireless device needs to be updated based on the device hash code and an exchange of information with a network node 550 of a wireless communication network.

In one embodiment, the second means for determining 514 whether the configured information in the wireless device needs to be updated comprises means for transmitting the device hash code to the network node, and means for receiving an indication from the network node in response to the transmitted device hash code. The indication indicates whether the configured information in the wireless device needs to be updated.

The indication may be a message indicating that the configured information in the wireless device needs to be updated. Alternatively, the indication that the configured information in the wireless device needs to be updated is implicit by not receiving any message in response to the transmitted device hash code. The wireless device may be further comprise means for receiving configuration information from the network node, and means for updating the configured information in the wireless device based on the received configuration information. The configuration information may be broadcasted by the network node, or may be received from the network node upon request from the wireless device.

The received indication may alternatively be a message comprising configuration information. The message then indicates that the configured information in the wireless device needs to be updated. The wireless device may further comprise means for updating the configured information in the wireless device based on the received configuration information.

In another embodiment (see embodiment D above), the second means for determining 514 whether the configured information in the wireless device needs to be updated comprises means for transmitting a random access preamble to the network node, means for receiving a random access response from the network node coded using a network hash code associated with configured information in the network node, and means for attempting to decode the received random access response using the device hash code. The wireless device may in this embodiment further comprise means for determining that the configured information in the wireless device needs to be updated when the attempt to decode fails. The wireless device may further comprise means for receiving configuration information from the network node, and means for updating the configured information in the wireless device based on the received configuration information. The configuration information may be broadcasted by the network node, or may be received from the network node upon request from the wireless device.

Furthermore, the network node 550 comprises a means for determining 561 adapted to determine a network hash code based on the configured information in the network node, and a means for directing 562 adapted to direct information which is based on the network hash code to the wireless device 500. The information enables the wireless device to determine whether configured information in the wireless device needs to be updated.

In one embodiment, the network node 550 may further comprise means for receiving the device hash code from the wireless device, and comparing the device hash code with the network hash code. The means for directing 562 the information to the wireless device may comprise means for indicating to the wireless device whether the configured information in the wireless device needs to be updated based on the comparison. The network node 550 may further comprise means for indicating whether the configured information in the wireless device needs to be updated comprising one of the following: means for transmitting a message to the wireless device indicating that an update of the configured information in the wireless device is needed; means for transmitting configuration information to the wireless device indicating that an update based on the configuration information is needed; and means for implicitly indicating that an update of the configured information in the wireless device is needed by not transmitting a message in response to the received device hash code.

The device hash code received from the wireless device may be associated also with an identity of the wireless device. The network node 550 may further comprise means for determining the identity of the wireless device using the device hash code, and means for deciding whether the wireless device should have access to the system based on the determined identity.

The means for determining 561 the network hash code may comprise means for determining two network hash codes based on two alternative configurations associated with the wireless communication network. The network node may further comprise means for comparing hash codes by matching the device hash code against the two network hash codes. When a match is found, the network node may comprise means for selecting one of the two alternative configurations corresponding to the matching one of the two network hash codes, and the means for directing 562 information may comprise means for indicating to the wireless device that the configured information in the wireless device needs no update.

In another embodiment, the network node 550 may further comprise means for receiving a random access preamble from the wireless device, and means for coding a random access response using the network hash code. The means for directing 562 information may comprise means for transmitting the coded random access response to the wireless device, such that an attempt to decode the random access response by the wireless device based on the device hash code indicates to the wireless device whether the configured information in the wireless device needs to be updated.

The means described above are functional units which may be implemented in hardware, software, firmware or any combination thereof. In one embodiment, the means are implemented as a computer program running on a processor.

In still another alternative way to describe the embodiment in **Figure 5a****,** the wireless device 500 may comprise a Central Processing Unit (CPU) which may be a single unit or a plurality of units. Furthermore, the wireless device may comprise at least one computer program product (CPP) in the form of a non-volatile memory, e.g. an EEPROM (Electrically Erasable Programmable Read-Only Memory), a flash memory or a disk drive. The CPP may comprise a computer program, which comprises code means which when run on the CPU of the wireless device causes the wireless device to perform the methods described earlier in conjunction with **Figures 3a****-d**. In other words, when said code means are run on the CPU, they correspond to the processing circuit 501 in **Figure 5a**. Furthermore, the network node 550 may comprise a Central Processing Unit (CPU) which may be a single unit or a plurality of units. Furthermore, the network node 550 may comprise at least one computer program product (CPP) in the form of a non-volatile memory, e.g. an EEPROM (Electrically Erasable Programmable Read-Only Memory), a flash memory or a disk drive. The CPP may comprise a computer program, which comprises code means which when run on the CPU of the network node 550 causes the network node to perform the methods described earlier in conjunction with **Figures 4a****-c**. In other words, when said code means are run on the CPU, they correspond to the processing circuit 551 in **Figure 5a**.

The above mentioned and described embodiments are only given as examples and should not be limiting. Other solutions, uses, objectives, and functions within the scope of the accompanying patent claims may be possible.

## Claims

1. A method performed by a wireless device (500), wherein the wireless device is configured with access information comprising Random Access Channel configuration and separated system information associated with at least one of the wireless device and one or more wireless communication networks to which the wireless device is connectable, the method comprising:
- determining (310) a device hash code based on the configured system information in the wireless device,
- transmitting (325) a random access preamble to the network node, the method **characterized in** comprising:
- receiving (326) a random access response from the network node coded using a network hash code associated with configured system information in the network node,
- attempting (327) to decode the received random access response using the device hash code,
the method comprising when the attempt to decode fails:
- determining (328) that the configured system information in the wireless device needs to be updated.

2. The method according to claim 1, the method further comprising in response to determining that the configured system information in the wireless device needs to be updated:
- receiving (330) system information from the network node, and
- updating (340) the configured system information in the wireless device based on the received system information.

3. The method according to claim 2, the method further comprising in response to determining that the configured system information in the wireless device needs to be updated:
- stopping the random access procedure, and
- reinitiating the random access procedure after updating the configured system information.

4. The method according to claim 1, the method further comprising when the attempt to decode succeeds:
- proceeding with the random access procedure.

5. A method performed by a network node (550) of a wireless communication network, wherein the network node is configured with access information comprising Random Access Channel configuration and separated system information associated with the wireless communication network, the method comprising:
- determining (410) a network hash code based on the configured system information in the network node,
- receiving (417) a random access preamble from the wireless device, the method **characterized in** comprising:
- coding (418) a random access response using the network hash code,
- transmitting (422) the coded random access response to the wireless device, such that an attempt to decode the random access response by the wireless device based on the device hash code indicates to the wireless device whether the configured system information in the wireless device needs to be updated.

6. A wireless device (500) configured with access information comprising Random Access Channel configuration and separated system information associated with at least one of the wireless device and one or more wireless communication networks to which the wireless device is connectable, the wireless device being further configured to:
- determine a device hash code based on the configured system information in the wireless device,
- transmit a random access preamble to the network node (550), the wireless device **characterized in** being further configured to:
- receive a random access response from the network node coded using a network hash code associated with configured system information in the network node,
- attempt to decode the received random access response using the device hash code, and
- determine that the configured system information in the wireless device needs to be updated when the attempt to decode fails.

7. A network node (550) for operation in a wireless communication network, wherein the network node is configured with access information comprising Random Access Channel configuration and separated system information associated with the wireless communication network, the network node being further configured to:
- determine a network hash code based on the configured system information in the network node,
- receive a random access preamble from the wireless device (500), the network node **characterized in** being further configured to:
- code a random access response using the network hash code,
- transmit the coded random access response to the wireless device, such that an attempt to decode the random access response by the wireless device based on the device hash code indicates to the wireless device whether the configured system information in the wireless device needs to be updated.

8. A computer program comprising computer readable code which when run on a wireless device (500) causes the wireless device to perform a method as claimed in any of claims 1-4.

9. A computer program comprising computer readable code which when run on a network node (550) causes the network node to perform a method as claimed in claim 5.

10. A computer program product comprising a computer readable medium and a computer program according to claim 8 or 9, wherein the computer program is stored on the computer readable medium.

## Patentansprüche

1. Verfahren, das von einer drahtlosen Vorrichtung (500) durchgeführt wird, wobei die drahtlose Vorrichtung mit Zugangsinformation konfiguriert ist, die eine Random-Access-Channel-Konfiguration und getrennte Systeminformationen umfasst, die der drahtlosen Vorrichtung und einem oder mehreren drahtlosen Kommunikationsnetzen zugeordnet ist, mit denen die drahtlose Vorrichtung verbindbar ist, wobei das Verfahren Folgendes umfasst:
- Bestimmen (310) eines Vorrichtung-Hash-Codes auf der Grundlage der konfigurierten Systeminformation in der drahtlosen Vorrichtung,
- Übertragen (325) einer Direktzugriffspräambel an den Netzknoten, wobei das Verfahren **dadurch gekennzeichnet ist, dass** es Folgendes umfasst:
- Empfangen (326) einer Direktzugriffsantwort von dem Netzknoten, die unter Verwendung eines Netz-Hash-Codes codiert ist, der der konfigurierten Systeminformation in dem Netzknoten zugeordnet ist,
- Versuchen (327), die empfangene Direktzugriffsantwort unter Verwendung des Vorrichtung-Hash-Codes zu decodieren,
wobei das Verfahren Folgendes umfasst, wenn der Versuch zum Decodieren fehlschlägt:
- Bestimmen (328), dass die konfigurierte Systeminformation in der drahtlosen Vorrichtung aktualisiert werden muss.

2. Verfahren nach Anspruch 1, wobei das Verfahren ferner als Antwort auf das Bestimmen, dass die konfigurierte Systeminformation in der drahtlosen Vorrichtung aktualisiert werden muss, Folgendes umfasst:
- Empfangen (330) von Systeminformation von dem Netzknoten, und
- Aktualisieren (340) der konfigurierten Systeminformation in der drahtlosen Vorrichtung basierend auf der empfangenen Systeminformation.

3. Verfahren nach Anspruch 2, wobei das Verfahren ferner als Antwort auf das Bestimmen, dass die konfigurierte Systeminformation in der drahtlosen Vorrichtung aktualisiert werden muss, Folgendes umfasst:
- Stoppen der Direktzugriffsprozedur und
- Neuinitiieren der Direktzugriffsprozedur nach dem Aktualisieren der konfigurierten Systeminformation.

4. Verfahren nach Anspruch 1, wobei das Verfahren ferner Folgendes umfasst, wenn der Versuch zum Decodieren erfolgreich ist:
- Fortfahren mit der Direktzugriffsprozedur.

5. Verfahren, das von einem Netzknoten (550) eines drahtlosen Kommunikationsnetzes durchgeführt wird, wobei der Netzknoten mit Zugangsinformationen konfiguriert ist, die eine Random-Access-Channel-Konfiguration und getrennte Systeminformation, die dem drahtlosen Kommunikationsnetz zugeordnet ist, umfassen, wobei das Verfahren Folgendes umfasst:
- Bestimmen (410) eines Netz-Hash-Codes auf der Grundlage der konfigurierten Systeminformation in dem Netzknoten,
- Empfangen (417) einer Direktzugriffspräambel von der drahtlosen Vorrichtung, wobei das Verfahren **dadurch gekennzeichnet ist, dass** es Folgendes umfasst:
- Codieren (418) einer Direktzugriffsantwort unter Verwendung des Netz-Hash-Codes,
- Übertragen (422) der codierten Direktzugriffsantwort an die drahtlose Vorrichtung, so dass ein Versuch, die Direktzugriffsantwort durch die drahtlose Vorrichtung auf Grundlage des Vorrichtung-Hash-Codes zu decodieren, der drahtlosen Vorrichtung angibt, ob die konfigurierte Systeminformation in der drahtlosen Vorrichtung aktualisiert werden muss.

6. Drahtlose Vorrichtung (500), die mit Zugriffsinformation konfiguriert ist, die Random-Access-Channel-Konfiguration und getrennte Systeminformation umfasst, die mindestens entweder der drahtlosen Vorrichtung oder einem oder mehreren drahtlosen Kommunikationsnetzen zugeordnet ist, mit denen die drahtlose Vorrichtung verbindbar ist, wobei die drahtlose Vorrichtung ferner konfiguriert ist zum:
- Bestimmen eines Vorrichtung-Hash-Codes auf der Grundlage der konfigurierten Systeminformation in der drahtlosen Vorrichtung,
- Übertragen einer Direktzugriffspräambel an den Netzknoten (550), wobei die drahtlose Vorrichtung **dadurch gekennzeichnet ist, dass** sie ferner konfiguriert ist zum:
- Empfangen einer Direktzugriffsantwort von dem Netzknoten, die unter Verwendung eines Netz-Hash-Codes codiert ist, der der konfigurierten Systeminformation in dem Netzknoten zugeordnet ist,
- Versuchen, die empfangene Direktzugriffsantwort unter Verwendung des Vorrichtung-Hash-Codes zu decodieren, und
- Bestimmen, dass die konfigurierte Systeminformation in der drahtlosen Vorrichtung aktualisiert werden muss, wenn der Versuch zum Decodieren fehlschlägt.

7. Netzknoten (550) zum Betrieb in einem drahtlosen Kommunikationsnetz, wobei der Netzknoten mit Zugangsinformation konfiguriert ist, die eine Random-Access-Channel-Konfiguration und getrennte Systeminformation umfasst, die dem drahtlosen Kommunikationsnetz zugeordnet ist, wobei der Netzknoten ferner konfiguriert ist zum:
- Bestimmen eines Netz-Hash-Codes auf der Grundlage der konfigurierten Systeminformation in dem Netzknoten,
- Empfangen einer Zufallszugriffspräambel von der drahtlosen Vorrichtung (500), wobei der Netzknoten ferner **dadurch gekennzeichnet ist, dass** er ferner konfiguriert ist zum:
- Codieren einer Direktzugriffsantwort unter Verwendung des Netz-Hash-Codes,
- Übertragen der codierten Direktzugriffsantwort an die drahtlose Vorrichtung, so dass ein Versuch, die Direktzugriffsantwort durch die drahtlose Vorrichtung auf der Grundlage des Vorrichtung-Hash-Codes zu decodieren, der drahtlosen Vorrichtung angibt, ob die konfigurierte Systeminformation in der drahtlosen Vorrichtung aktualisiert werden muss.

8. Computerprogramm, umfassend computerlesbaren Code, der, wenn er auf einer drahtlosen Vorrichtung (500) ausgeführt wird, bewirkt, dass die drahtlose Vorrichtung ein Verfahren nach einem der Ansprüche 1 bis 4 durchführt.

9. Computerprogramm, umfassend computerlesbaren Code, der, wenn er auf einem Netzknoten (550) ausgeführt wird, bewirkt, dass der Netzknoten ein Verfahren nach Anspruch 5 durchführt.

10. Computerprogrammprodukt, umfassend ein computerlesbares Medium und ein Computerprogramm nach Anspruch 8 oder 9, wobei das Computerprogramm auf dem computerlesbaren Medium gespeichert ist.

## Revendications

1. Procédé mis en oeuvre par un dispositif sans fil (500), dans lequel le dispositif sans fil est configuré avec des informations d'accès comprenant une configuration de canal d'accès aléatoire et des informations système séparées associées à au moins l'un parmi le dispositif sans fil et un ou plusieurs réseaux de communication sans fil auxquels le dispositif sans fil peut être connecté, le procédé comprenant :
- la détermination (310) d'un code de hachage de dispositif sur la base des informations système configurées dans le dispositif sans fil,
- la transmission (325) d'un préambule d'accès aléatoire au noeud de réseau, le procédé **caractérisé en ce qu'**il comprend :
- la réception (326) d'une réponse d'accès aléatoire depuis le noeud de réseau codée en utilisant un code de hachage de réseau associé aux informations système configurées dans le noeud de réseau,
- la tentative (327) pour décoder la réponse d'accès aléatoire reçue en utilisant le code de hachage de dispositif,
le procédé comprenant lorsque la tentative pour décoder échoue :
- la détermination (328) que les informations système configurées dans le dispositif sans fil doivent être mises à jour.

2. Procédé selon la revendication 1, le procédé comprenant en outre en réponse à la détermination que les informations système configurées dans le dispositif sans fil doivent être mises à jour :
- la réception (330) d'informations système depuis le noeud de réseau, et
- la mise à jour (340) des informations système configurées dans le dispositif sans fil sur la base des informations système reçues.

3. Procédé selon la revendication 2, le procédé comprenant en outre en réponse à la détermination que les informations système configurées dans le dispositif sans fil doivent être mises à jour :
- l'arrêt de la procédure d'accès aléatoire, et
- le redéclenchement de la procédure d'accès aléatoire après mise à jour des informations système configurées.

4. Procédé selon la revendication 1, le procédé comprenant en outre lorsque la tentative pour décoder réussit :
- la réalisation de la procédure d'accès aléatoire.

5. Procédé mis en oeuvre par un noeud de réseau (550) d'un réseau de communication sans fil, dans lequel le noeud de réseau est configuré avec des informations d'accès comprenant une configuration de canal d'accès aléatoire et des informations système séparées associées au réseau de communication sans fil, le procédé comprenant :
- la détermination (410) d'un code de hachage de réseau sur la base des informations système configurées dans le noeud de réseau,
- la réception (417) d'un préambule d'accès aléatoire depuis le dispositif sans fil, le procédé **caractérisé en ce qu'**il comprend :
- le codage (418) d'une réponse d'accès aléatoire en utilisant le code de hachage de réseau,
- la transmission (422) de la réponse d'accès aléatoire codée au dispositif sans fil, de telle sorte qu'une tentative pour décoder la réponse d'accès aléatoire par le dispositif sans fil sur la base du code de hachage de dispositif indique au dispositif sans fil si les informations système configurées dans le dispositif sans fil doivent être mises à jour.

6. Dispositif sans fil (500) configuré avec des informations d'accès comprenant une configuration de canal d'accès aléatoire et des informations système séparées associées à au moins l'un parmi le dispositif sans fil et un ou plusieurs réseaux de communication sans fil auxquels le dispositif sans fil peut être connecté, le dispositif sans fil configuré en outre pour :
- déterminer un code de hachage de dispositif sur la base des informations système configurées dans le dispositif sans fil,
- transmettre un préambule d'accès aléatoire au noeud de réseau (550), le dispositif sans fil **caractérisé en ce qu'**il est configuré en outre pour :
- recevoir une réponse d'accès aléatoire depuis le noeud de réseau codée en utilisant un code de hachage de réseau associé aux informations système configurées dans le noeud de réseau,
- tenter de décoder la réponse d'accès aléatoire reçue en utilisant le code de hachage de dispositif, et
- déterminer que les informations système configurées dans le dispositif sans fil doivent être mises à jour lorsque la tentative pour décoder échoue.

7. Noeud de réseau (550) pour un fonctionnement dans un réseau de communication sans fil, dans lequel le noeud de réseau est configuré avec des informations d'accès comprenant une configuration de canal d'accès aléatoire et des informations système séparées associées au réseau de communication sans fil, le noeud de réseau étant configuré en outre pour :
- déterminer un code de hachage de réseau sur la base des informations système configurées dans le noeud de réseau,
- recevoir un préambule d'accès aléatoire depuis le dispositif sans fil (500), le noeud de réseau **caractérisé en ce qu'**il est configuré en outre pour :
- coder une réponse d'accès aléatoire en utilisant le code de hachage de réseau,
- transmettre la réponse d'accès aléatoire codée au dispositif sans fil, de telle sorte qu'une tentative pour décoder la réponse d'accès aléatoire par le dispositif sans fil sur la base du code de hachage de dispositif indique au dispositif sans fil si les informations système configurées dans le dispositif sans fil doivent être mises à jour.

8. Programme informatique comprenant un code lisible par un ordinateur qui lorsqu'il est exécuté sur un dispositif sans fil (500) amène le dispositif sans fil à mettre en oeuvre un procédé selon l'une quelconque des revendications 1 à 4.

9. Programme informatique comprenant un code lisible par un ordinateur qui lorsqu'il est exécuté sur un noeud de réseau (550) amène le noeud de réseau à mettre en oeuvre un procédé selon la revendication 5.

10. Produit programme informatique comprenant un support lisible par ordinateur et un programme informatique selon la revendication 8 ou 9, dans lequel le programme informatique est stocké sur le support lisible par ordinateur.
